# EUROPEAN PATENT APPLICATION

(11) **EP 1 559 909 A1**
(43) Date of publication of application: **03.08.2005**
(21) Application number: 03758855.5
(22) Date of filing: 24.10.2003
(51) Int. Cl.: F02M 69/00, F02M 69/04, B62J 39/00

(54) **TWO-WHEELED MOTOR VEHICLE**

(30) Priority: 25.10.2002 JP 2002311486
(71) Applicant: YAMAHA HATSUDOKI KABUSHIKI KAISHA, Iwata-shi, Shizuoka 438-8501 (JP)
(72) Inventor: TSUZUKU, Hiroyuki, c/o YAMAHA HATSUDOKI K. K., Iwata-shi, Shizuoka 438-8501 (JP); ISHII, Wataru, c/o YAMAHA HATSUDOKI K. K., Iwata-shi, Shizuoka 438-8501 (JP); HANAJIMA, Toshiharu, c/o YAMAHA HATSUDOKI K. K., Iwata-shi, Shizuoka 438-8501 (JP); TOMII, Eiji, c/o YAMAHA HATSUDOKI K. K., Iwata-shi, Shizuoka 438-8501 (JP)
(74) Representative: Pfau, Anton Konrad, Dr.
(86) International application number: PCT/JP2003/013594
(87) International publication number: WO 2004/038214

(57) **Abstract**

The motorcycle according to the invention includes a main frame 20b that curves downward, an engine 1 and an air cleaner 26 positionedbelow the main frame 20b and an intake pipe provided below the main frame 20b, between the engine 1 and air cleaner 26. The engine 1 is mounted with an injector 11 for ejecting a fuel and includes a cylinder head provided with an injector mounting section that positions an injection nozzle 11a in a position between an axis of an intake valve 7 and a center axis of an intake port 3g and close to an end of the intake port 3g on the intake valve side. The intake pipe and injector are positioned so as to be prevented from interfering with each other. This avoids the injector and main frame from interfering with each other and prevents the placement flexibility of the engine from being lost. Furthermore, it is possible to provide excellent intake efficiency and improve the output of the engine.

## Description

### Technical Field

The present invention relates to a motorcycle mounted with an engine including an intake unit whose intake path has a fuel injection valve placed at some point thereof.

### Background Art

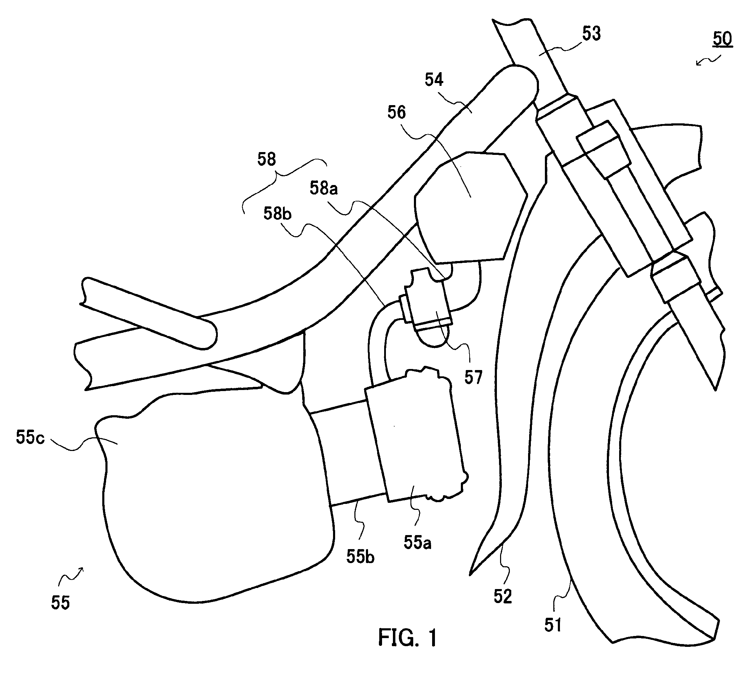

A conventional under-bone type motorcycle, for example, a motorcycle 50 shown in FIG.1, comprises a front tire 51 and a front fender 52 for covering the front tire 51 in the lower part, a body frame having a backbone 54 inclined toward the rear part of the body from a head pipe 53 which rotatably holds a steering handle in the upper part and an engine 55 below the backbone 54.

To be cooled with wind while the vehicle is moving, the engine 55 is fixed below the backbone 54 by means of a crankcase 55c with a cylinder head 55a attached to a body cylinder 55b disposed on the front side of the body. An air cleaner 56 attached to the backbone 54 on the front side of the body and a carburetor 57 is connected between this air cleaner 56 and engine 55 via an intake pipe (intake manifold) 58 as a fuel supply unit.

Thus, according to the structure of the conventional under-bone type motorcycle 50 provided with the carburetor 57, the carburetor 57 which should be placed horizontally for functional reasons is provided between the air cleaner 56 above and the cylinder head 55a below in a narrow space surrounded by the front fender 52, backbone 54 and cylinder head 53a of the engine 55. For this reason, an intake pipe 58a connecting the air cleaner 56 and carburetor 57 and an intake pipe 58b connecting the carburetor 57 and cylinder head 55a should be bent at an acute angle, which increases air resistance in the respective parts of the intake pipe 58 and prevents the output from improving.

As a structure for solving this problem, a structure using an engine provided with a fuel injection type intake unit instead of the carburetor 57 is available.

The related art engines provided with a fuel injection type intake unit include an engine (for example, see Unexamined Japanese Patent Publication No.HEI09-014102) provided with a fuel injection valve (hereinafter referred to as injector) on the downstream side of throttle valves in an intake path communicating with an intake valve opening.

The engine with the above described conventional intake unit arranges the injector in an intake manifold which is a part of the intake path and which is away from the intake valve opening toward the upstream. For this reason, when the engine is mounted on the body frame of the motorcycle, the location of the intake manifold itself is limited for structural reasons of the motorcycle and the problem is that it is difficult to secure a space for installing the injector.

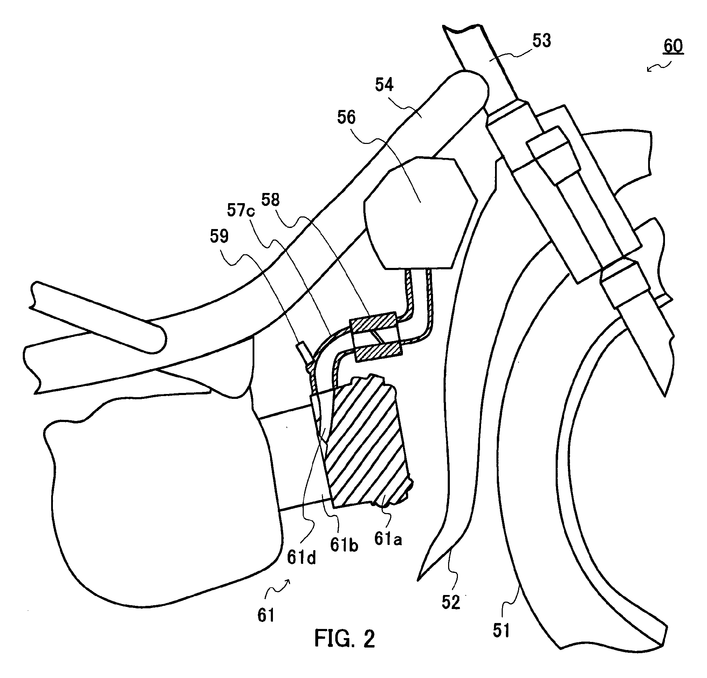

FIG.2 shows an example of a motorcycle with an engine including a fuel injection intake unit. In FIG.2, the same components as those in FIG.1 are assigned the same names and the same reference numerals and explanations thereof will be omitted.

A motorcycle 60 shown in FIG.2 has the same body frame as the under-bone type motorcycle 50 shown in FIG. 1 and an engine 61 is placed below the backbone 54. A throttle body 58 is placed between a cylinder head 61a of the engine 61 and an air cleaner 56.

As shown in this figure, in order for the engine 61 including the fuel injection intake unit to correctly supply atomized air of an injector (fuel intake valve) 59 to the interior of the cylinder block 61b, it is necessary to bend the portion of an intake pipe 57c connected to an intake port 61d and mount the injector 59 in this bent portion.

That is, for example, with the body frame of an under-bone type, fixing the engine in suspension below amain pipe extending downward from a head pipe towards the rear will easily cause interference between the injector and the main pipe. Thus, it is necessary to lower the placement position of the engine, or slant or displace the placement position of the injector towards right or left. As such, the placement flexibility of the engine to the body is resultantly reduced. Moreover, attempting to place the injector in a position where it does not interfere with the main pipe (backbone) results in a smaller radius of curvature as shown in FIG.2, which increases air resistance and prevents improvement of the output.

### Disclosure of Invention

It is an object of the present invention to provide a motorcycle capable of avoiding interference between the injector and the body frame and retaining the placement flexibility of the engine to the body, provide excellent intake efficiency and improve the output.

This object can be achieved by a motorcycle comprising a downward curved main frame, an engine and an air cleaner arranged below the main frame, and an intake pipe provided below the main frame and between the engine and air cleaner, wherein the engine comprises an intake valve mounting section in which an intake valve for taking air into a cylinder is mounted, an exhaust valve mounting section in which an exhaust valve for exhausting a gas from the cylinder is mounted, an intake port connected to the intake pipe for supplying outer air to the intake valve, an injector mounting section in which an injector for ejecting a fuel is mounted and a fuel injection opening is disposed in a position between a stem of the intake valve and a center axis of the intake port and close to an end of the intake port on the intake valve side, and a cylinder head with which the intake valve mounting section, the exhaust valve mounting section, the intake port and the injector mounting section are formed integral and the intake pipe and the injector are arranged in such a way as to be prevented from interfering with each other.

### Brief Description of Drawings

FIG.1 is a schematic configuration diagram showing how an engine of a conventional motorcycle is mounted;
FIG.2 is another schematic configuration diagram showing how an engine of a conventional motorcycle is mounted;
FIG. 3 is a right side view showing how an engine is mounted in a motorcycle according to a first embodiment of the present invention;
FIG.4 is a schematic configuration diagram showing how the engine is mounted in the motorcycle shown in FIG.3;
FIG.5 is a plan view showing how the engine is mounted;
FIG.6 is a cross-sectional right side view of the engine;
FIG.7 is a cross-sectional front view of the engine;
FIG.8 is a right side view showing how an engine is mounted in a motorcycle according to a second embodiment of the present invention; and
FIG. 9 is a right side view showing how an engine is mounted in a motorcycle according to a third embodiment of the present invention.

### Best Mode for Carrying Out the Invention

With reference now to the attached drawings, embodiments of the present invention will be explained in detail below.

### (Embodiment 1)

This embodiment of the present invention will be explained based on the attached drawings below.

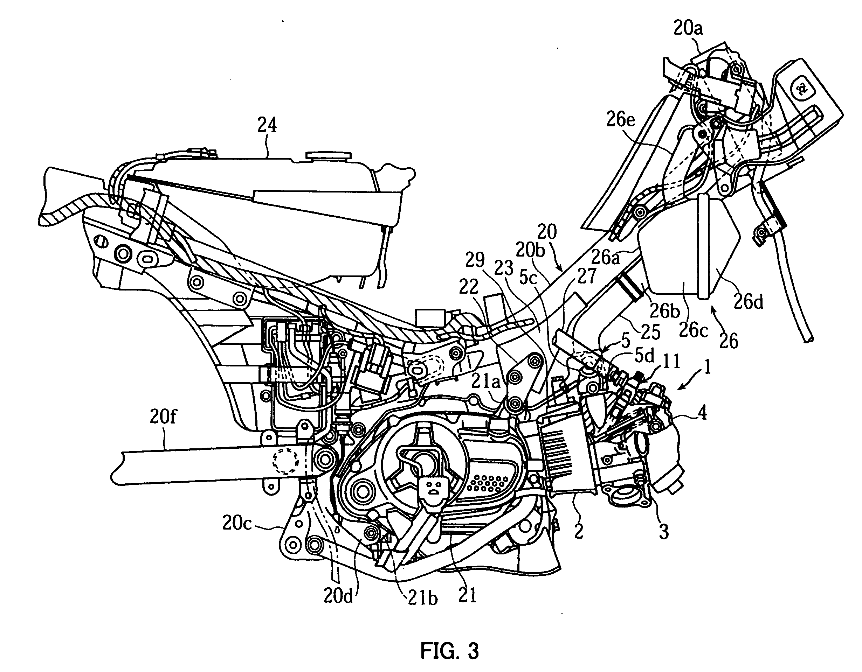

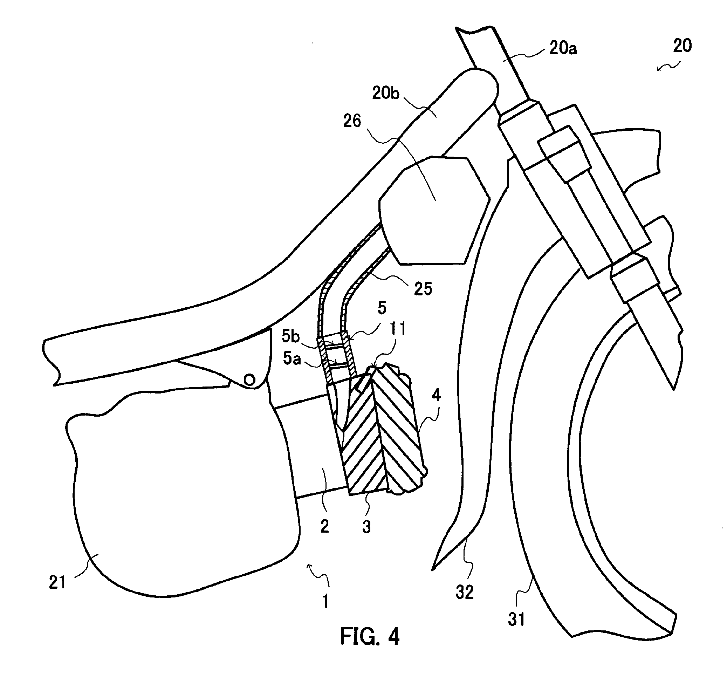

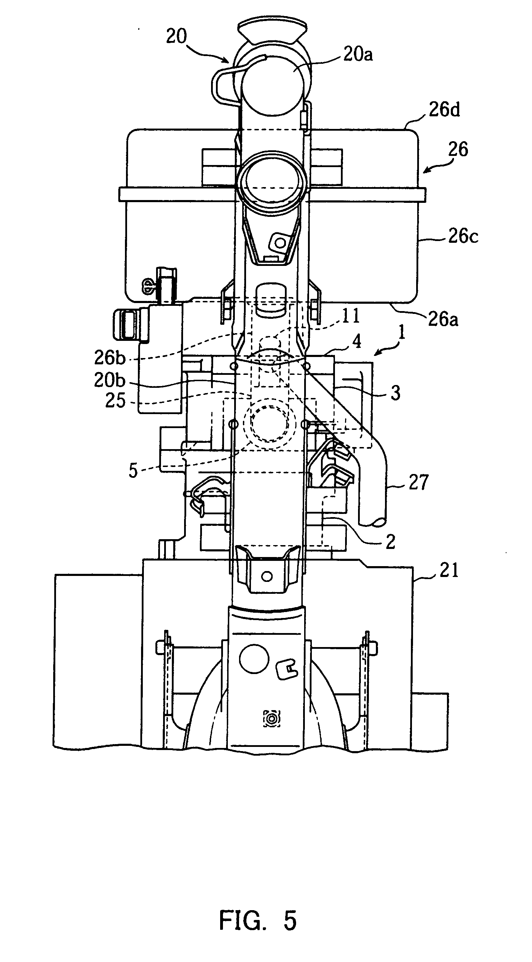

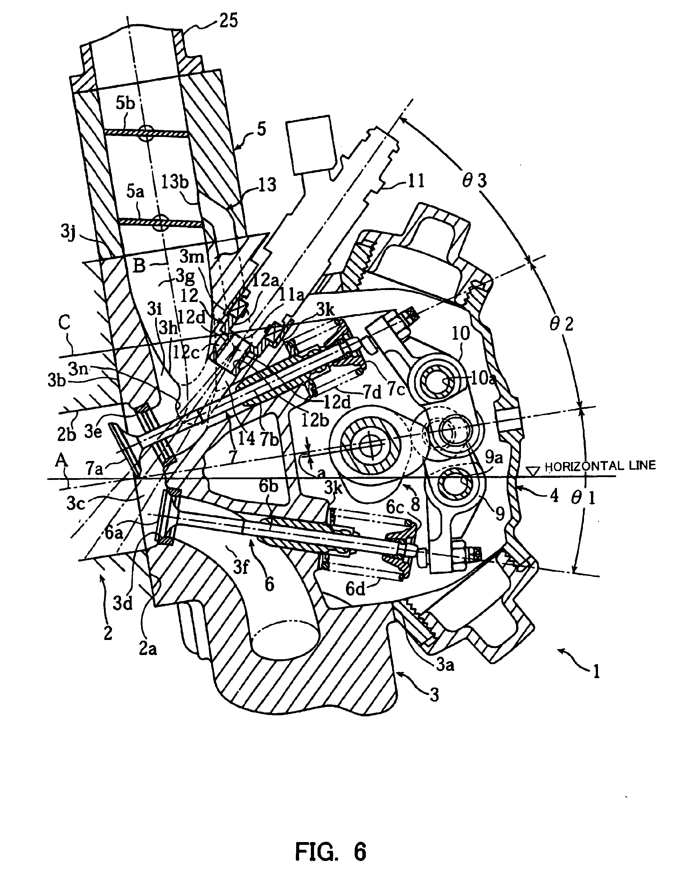

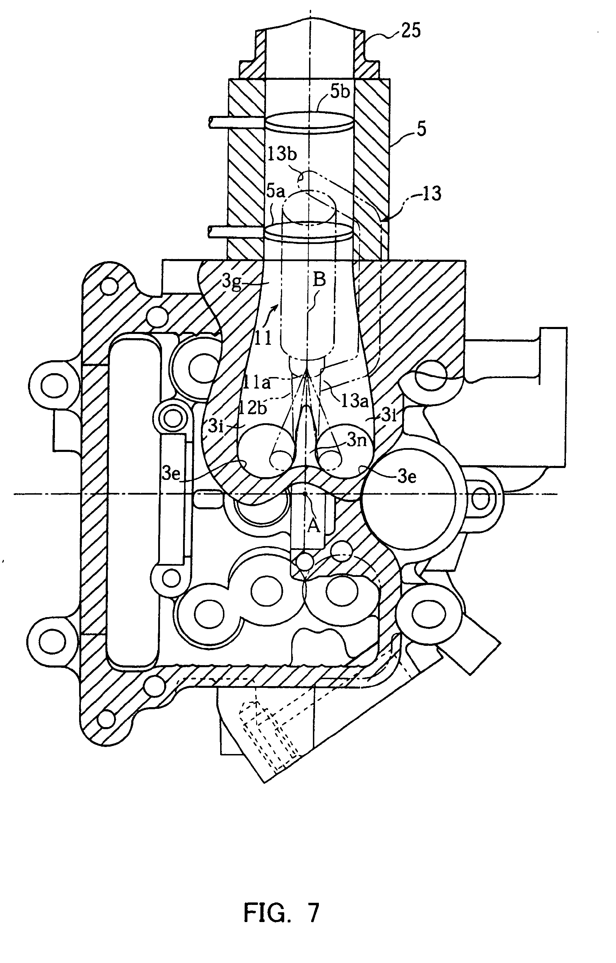

FIG.3 to FIG.7 illustrate a motorcycle according to the first embodiment, FIG.3 being a right side view showing how an engine is mounted, FIG.4 being a schematic configuration diagram showing how the engine is mounted in the motorcycle shown in FIG. 3, FIG.5 being a plan view showing how the engine is mounted and FIG. 6, FIG.7 being a cross-sectional right side view and cross-sectional front view of a cylinder head part of the engine. Herein, in the present embodiment, expressions of front, rear, left, and right are those viewed from a driver seating on a seat of the motorcycle.

In FIG.3 to FIG.5, reference numeral 20 denotes a body frame of an under-bone type of the motorcycle. This body frame 20 is provided with a head pipe 20a, the end part of which supports a front fork that axially supports a front wheel such that the front wheel can be directed to left and right freely, a main pipe (main frame) 20b which extends from the head pipe 20a downward under the seat towards the back obliquely, and a rear arm bracket 20c which is fixed to the rear end part of the main pipe 20b and extends downward. To the rear arm bracket 20c, a rear arm 20f axially supporting a rear wheel by its rear end part is pivotally supported to vertically swingable.

Note that reference numeral 24 denotes a fuel tank provided above the rear end part of the main pipe 20b, and a seat (not shown) is mounted on the fuel tank 24. As shown in FIG.4, a front tire 31 and a front fender 32 for covering the front tire 31 are provided at the lower end of the main pipe 20a.

Below the rear part of the main pipe 20b and in the front of the rear arm bracket 20c, an engine 1 is fixed in suspension, a cylinder axis of which is directed substantially horizontal towards the front, and a crankshaft directed in the body-width direction.

More specifically, in the engine 1, a boss section 21a formed to the front end part of the upper wall of a crankcase 21 is fixed using a bolt to a bracket 23 fixed to the right-side and left-side of the main pipe 20b via a bracket 22. Moreover, a boss section 21b formed to the rear part of the bottom wall of the crankcase 21 is fixed using a bolt to a boss section 20d formed to the lower front end part of the rear arm bracket 20c.

The engine 1 is of an air-cooled four-cycle single cylinder type, and to the front wall of the crankcase 21 including a crankshaft and a transmission mechanism, a cylinder block 2 and a cylinder head 3 are stacked to be tightened together securely. A front plane 3a of the cylinder head 3 is provided with a head cover 4.

As shown in FIG. 6, into a cylinder bore 2b of the cylinder block 2, a piston (not shown) is inserted to freely slide. The piston is coupled to the crankshaft by a connecting rod.

To a rear plane 3b of the cylinder head 3, a combustion recess 3c structuring the combustion chamber with the piston in the cylinder bore 2b is formed. In the combustion recess 3c, an exhaust valve opening 3d and an intake valve opening 3e are formed, two of each. The exhaust valve openings 3d are connected to an exhaust port 3f formed in the cylinder head 3 and an exhaust gas from the exhaust port 3d is directed to the lower wall of the cylinder head 3 by the exhaust port 3f. Furthermore, the intake valve openings 3e are connected to an intake port 3g formed in the cylinder head 3 and intake air to the intake valve openings 3e is guided to the upper wall of the cylinder head 3 by the intake port 3g.

The exhaust valve openings 3d are each opened/closed by a valve head 6a of an exhaust valve 6 which moves forward and backward in a direction perpendicular to the opening plane of the exhaust valve opening 3d.

The exhaust valve 6 is disposed in the cylinder head 3 and a valve shaft 6b of the exhaust valve 6 is placed in such a way as to slant towards below the engine, forming an angle of θ1 with a cylinder axis A. A retainer 6c is disposed at a base end of the valve shaft 6b and a valve spring 6d is interposed between this retainer 6c and a spring seat 3k formed in the cylinder head 3.

The exhaust valve 6 is biased by this valve spring 6d in the direction in which the valve shaft 6b goes away from the exhaust valve opening 3d, that is, in the direction in which the valve head 6a closes the exhaust valve opening 3d.

Furthermore, the intake valve openings 3e are each opened/closed by a valve head 7a of an intake valve 7, which moves forward and backward in a direction perpendicular to the opening plane of the intake valve opening 3e. The intake valve 7 is disposed in the cylinder head 3 and a valve shaft 7b of this intake valve 7 is placed so as to slant towards above the engine, forming an angle of θ2 with the cylinder axis line A. Furthermore, a retainer 7c is disposed at a base end of the valve shaft 7b and a valve spring 7d is interposed between this retainer 7c and a spring seat 3k formed in the cylinder head 3. The intake valve 7 is biased by this valve spring 7d in the direction in which the valve shaft 7b goes away from the exhaust valve opening 3e, that is, in the direction in which the valve head 7a closes the exhaust valve opening 3e.

A cam shaft 8 for both intake and exhaust is placed, to freely rotate, so as to be between the valve spring 7d of the intake valve 7 and the valve spring 6d of the exhaust valve 6 of the cylinder head 3.

In the front between the cam shaft 8 and the exhaust valve 6, an exhaust rocker arm 9 is placed, which is rotatably supported by an exhaust rocker shaft 9a. Furthermore, in the front between the cam shaft 8 and the intake valve 7, an intake rocker arm 10 is placed, which is rotatably supported by an intake rocker shaft 10a. These rocker arms 9, 10 contact a cam of the cam shaft 8 at one end, push the upper ends of the valve stem 6b, 7b at the other end as the cam shaft 8 rotates and move the valve stem 6b, 7b in opposite directions to the bias direction, respectively. The intake rocker axes 9a, 10a are supported on boss sections protruding from the inner surface of the head cover 4.

Here, with respect to the cylinder axis line A, the cam shaft 8 is offset by a towards the exhaust side. Thereby, the angle θ2 formed with the cylinder axis line A of the intake valve 7 is set so as to be smaller than the angle θ1 formed with the cylinder axis line A of the exhaust valve 6. That is, the intake valve 7 is placed upright closer to the cylinder axis line A than the exhaust valve 6. As a result, a large space covering from the intake valve 7 to the upper part of the engine is saved and using this space allows the injector, which will be described later, to be installed freely.

The intake port 3g is bent in the direction substantially orthogonal to the cylinder axis line A from the intake valve opening 3e and then extends upwards, partially structuring the intake path for guiding the outside air into the combustion chamber.

A bent portion at a downstream end of the intake port 3g is divided by a partition wall 3h into branch paths 3i, 3i communicating with the left and right intake valve openings 3e, 3e. To an outer connection port 3j locating at an upstream end of the intake port 3g, a throttle body 5 is connected as a part of the intake path.

The throttle body 5 includes, from downstream to upstream, first and second throttle valves 5a and 5b in this order and is disposed in a position close to the intake port 3g.

To a drive pulley 5c fixed to the valve shaft of the second throttle valve 5b, an end of a throttle operation cable 29 is coupled, and the other end of the cable 29 is coupled to a throttle grip of a steering handle.

The drive pulley 5c of the second throttle valve 5b and the first throttle valve 5a are coupled to each other via a delay mechanism 5d of a link type.

The opening degrees of the first and second throttle valves 5a and 5b are controlled as below in accordance with the change of a load (throttle operation amount). The first throttle valve 5a placed in the downstream is retained at a fully-closed position in the range from the no-load (idling) operation period to the predetermined part-load operation period. Thereby, atomized air for accelerating atomization of the ejected fuel is supplied a lot to the vicinity of a injection nozzle 11a of the injector 11. Thus, by supplying a large amount of atomized air to the vicinity of the injection nozzle 11a of the injector 11, the throttle body 5 accelerates gasification of the jet fuel in a low-load operation.

The second throttle valve 5b located in the upstream is the throttle valve of a normal type used for controlling the area of the main-passage depending on the throttle operation.

On the front wall side of the intake port 3g in FIG.3, the injector 11 is placed so as to slant towards above the engine, corresponding to a center axis B of the intake port 3g with a front view, and forming an angle of (θ2 + θ3) with respect to the cylinder axis line A when viewed from the cam shaft.

The position placement and angle setting, etc., of the injector 11 are made as follows. That is, the air/gas mixture of the fuel and the atomized air mainly goes through the side of the cylinder axis line A of a annular gap formed between the intake valve opening 3e and the valve head 7a of the intake valve 7 at the opening position along the inner part of the exhaust valve opening in the cylinder bore 2b, and is ejected towards the cylinder axis line A. That is, the injector 11 is disposed in the cylinder head 3 at such an angle that the fuel injection opening is arranged opposed to the intake valve opening 3e and the mixture of the fuel ejected from the fuel injection opening and air generates air motion such as tumble in the cylinder.

That is, as shown in FIG.2, the injector 11 is disposed in a position that the diameter of an effective spot of the mixture of the fuel ejected from the fuel injection opening of the injection nozzle 11a and air at the intake valve opening 3e is smaller than the radius of the intake valve opening and the axis of this effective spot passes through the intake valve opening 3e and crosses the inner wall of the cylinder.

In other words, the injector 11 is disposed so that the injection nozzle 11a, as seen from the horizontal direction in FIG.1, is located within an area connecting the base end of the valve shaft 7b when the intake valve openings 3e are closed with the valve heads 7a, an intersection between the axes of the intake valves 7 and the center axis B of the intake port 3g and an intersection between the center axis B of the intake port 3g and the external connection port 3j at the upstream end of the cylinder head 3.

Note that this injector 11 is preferably disposed in such a way that the distance from the opening planes of the intake valve openings 3e to the injection nozzle 11a is no greater than 4.0 cm.

Furthermore, the injector 11 directly ejects the fuel from the intake valve 3e opened during fuel ejection into the cylinder bore 2b.Engine Control Unit For example, the ejection timing of the injector 11 with respect to the intake valve openings 3e is controlled by a control unit such as an ECU (Engine Control Unit).

The front wall of the intake port 3g is provided with an attachment hole 3m extending therethrough so that the exterior thereof communicates from the outside with the interior of the intake port 3g.

The part of the attachment hole 3m near the intake port communicating portion thereof forms an injection path 14 for guiding the injected fuel from the intake port 3g to the interior of the cylinder bore 2b through the intake valve opening, and a cylindrical holder 12 is fitted firmly in the injectionpassage 14. In a support hole 12a placed outside of the axial direction of the holder 12, the injection nozzle 11a of the injector 11 is inserted and engaged.

In this way, the injection nozzle 11a is disposed in a position between the stem of the intake valve 7 and center axis B of the intake port 3g and close to the end of the intake port 3g on the intake valve side.

Herein, the fuel injection hole of the injection nozzle 11a is in a shape of ejecting the fuel as branch currents towards the right and left intake valve openings 3e, 3e.

Further, the inner part of the holder 12 in the axial direction is a jet opening 12b.The fuel ejected from the injection nozzle 11a of the injector 11 so as to branch into two flows is mixed with the atomized air in the jet opening 12b and supplied to the combustion chamber (cylinder bore 2b) by going through the branch paths 3i, 3i of the intake port 3g from the jet opening 12b.

Here, the jet opening 12b of the holder 12 is opposed to the partition wall 3h, which is provided with a recessed portion 3n notched for avoiding collision with the fuel ejected from the injector 11.

An annular air chamber 12c is formed between a portion formed to a smaller diameter on an outer circumferential part of the injection port 12b of the holder 12 and the attachment hole 3m, and the air chamber 12c communicates with the interior of the injection port 12b via a plurality (four in this embodiment) of communication ports 12d formed in a wall of the holder 12 so that the communication ports extend radially through the same wall at regular angular intervals. A downstream end opening (connection port) 13a of the sub-passage 13 communicates with the air chamber 12c. The sub-passage 13 extends along the intake port 3g toward an upstream side, and its upstream end opening 13b communicates with a space between the first and second throttle valves 5a, 5b in the throttle body 5.

Out of the four communication ports 12d of this embodiment, the axes of two communication ports 12d positioned on the side of the downstream end opening 13a form an angle of 45° with respect to the axis of the downstream end opening 13a. That is, the communication ports 12d are formed in the direction that is offset from the downstream end opening 13a.

As shown in FIG.5, to the throttle body 5, an intake pipe 25 structuring the remaining part of the intake path is connected. This intake pipe 25 is first extending upward from the throttle body 5, then is extending upward towards the front obliquely along the lower plane of the main pipe 20b, and is connected to a connection port 26b protruded from the rear wall 26a of the air cleaner 26.

In the air cleaner 26, a lid 26d is removably attached to the front side opening of a box body 26c, and elements are accommodated therein. This air cleaner 26 is placed behind the head pipe 20a in the lower front side of the main pipe 20b, and fixed to the main pipe 20b using a bolt. Here, reference numeral 26e is a duct directing the outside air to the air cleaner 26 and this duct 26e opens towards the rear of the head pipe 20a in the upper front part of the main pipe 20b.

Reference numeral 27 denotes a fuel supply hose connected to the injector 11, and the fuel supply hose 27 extends upward towards the rear on the right side of the intake pipe 25 and the main pipe 20b and is connected to the fuel tank 24 via a fuel supply pump. Herein, the fuel supply hose 27 may be placed on the left side of the intake pipe and the main pipe.

Thus, the motorcycle of this embodiment comprises a downward curved main pipe (main frame) 20b, an engine 1 and an air cleaner 26 arranged below the main pipe 20b, and an intake pipe 25 provided below the main pipe 20b and between the engine 1 and air cleaner 26. The engine 1 comprises an intake valve mounting section in which an intake valve 7 for taking air into a cylinder is mounted, an exhaust valve mounting section in which an exhaust valve 6 for exhausting a gas from the cylinder is mounted, an intake port connected to the intake pipe for supplying outer air to the intake valve, an injector mounting section in which an injector 11 for ejecting a fuel is mounted and a fuel injection nozzle 11a (fuel injection opening) is arranged in a position between a stem of the intake valve 7 and a center axis B of an intake port 3g and close to an end of the intake port 3g on the intake valve side, and a cylinder head 3 with which the intake valve mounting section, the exhaust valve mounting section, the intake port 3g and the injector mounting section are formed integral therewith. As shown in FIG. 4, the motorcycle provided with this engine 1 arranges the intake pipe 25 and the injector 11 in such a way as to be prevented from interfering with each other in a space surrounded by the front fender 32, main pipe 20b and engine 1.

Then, the functions and effects of the unit of the present embodiment will be explained.

From the no-load operation period to a predetermined part-load operation period, the first throttle valve 5a on the downstream is fully closed, and the second throttle valve 5b is controllably opened or closed responding to the throttle operation.

In the operation period where the load is smaller than the part-load operation period, the intake negative pressure on the engine side acts on the sub-passage 13 as it is and the intake air is entirely guided to the air chamber 12c from the throttle body 5 through the sub-passage 13. Then, the air introduced into this air chamber 12c is ejected therefrom to the jet opening 12b via the communication holes 12d and now the fuel ejected from the injection nozzle 11a is mixed with the fuel while being atomized. Then, the resulting air/gas mixture is supplied into the combustion chamber from the right and left intake valve openings 3e after going through the right and left sides of the recessed portion 3n formed in the partition wall 3h.

In such a case, the injection nozzle 11a of the injector is located closer to the intake valve opening 3e, that is, the injection nozzle 11a is located in a position between the stem of the intake valve 7 and center axis B of the intake port 3g and close to the end of the intake port 3g on the intake valve side. More specifically, the fuel injection hole of the injection nozzle 11a is located in such a position as to be closer to the cylinder axis A than a straight line C being parallel to the cylinder axis line A and passing through the intake side end part of the valve operating mechanism. Since the injection nozzle 11a is close to the intake valve opening 3e, the fuel ejected from the injection nozzle 11a is mixed with air and the resultant mixture is directly ejected into the intake valve opening 3e. Therefore, the area of the wall to which the fuel is adherent can be reduced in size and this resultantly reduces the amount of fuel that adheres to the wall and improves the fuel efficiency at the time of cold operation. Moreover, the exhaust gas properties can be prevented from becoming worse, which is often caused by discharge of unburned gases at the time of fuel cut or idling. Also the throttle response can be improved, i.e., the engine rotation speed increases without delay even if the throttle is abruptly operated.

The air/gas mixture is supplied in the axial direction along the inner plane of the cylinder bore mainly from the exhaust part of a annular gap formed between the intake valve opening 3e and the valve head 7a of the intake valve 7 located at the opening position thereof. With such a structure, tumbling (vertical vortexes) can be generated in the cylinder bore 2a with reliability, improving the combustion efficiency while accelerating atomization of the fuel. In the present embodiment, the cam shaft 8 is offset towards the exhaust side from the cylinder axis line A. Thereby, the angle θ2 formed between the cylinder axis line A and the intake valve 7 is set so as to be smaller than the angle θ1 formed between the cylinder axis line A and the exhaust valve 6. That is, the intake valve 7 is placed upright closer to the cylinder axis line A.

That is, the cylinder head 3 of the engine 1 is formed integral with the intake valve mounting section, the exhaust valve mounting section, the intake port, the fuel injection opening and the injector mounting section which is arranged in a position between the stem of the intake valve and the center axis B of the intake port and close to an end of the intake port on the intake valve side.

As a result, a space can be saved in the intake part of the cylinder head 3 for having the injector 11 placed closer to the intake valve opening 3e and this resultantly reduces the amount of fuel attaching to the wall and improves the response and the combustion efficiency.

The portion of the injection path in which the injection nozzle 11a is positioned and the portion of the throttle body (main passage) 5 which is between the first and second throttle valves 5a, 5b are communicated with each other by the sub-passage 13, and the first throttle valve 5a is fully closed in an operation period between theno-load operation period to the predetermined partial load operation period. Therefore, a large quantity of intake air can be supplied reliably as the atomized air to the injection nozzle 11a, so that the fuel atomization can be promoted.

Furthermore, according to Embodiment 1, in the cylinder head 3 with which the exhaust valve 6 and intake valve 7 arranged symmetrically with respect to the cylinder axis as the center, and the intake port 3g arranged perpendicular to the axis of the cylinder bore 2b are formed integral, the injection nozzle 11a at an end of the injector 11 is disposed at a position between the stem of the intake valve 7 and the center axis B of the intake port 3g and also close to an end of the intake port 3g on the intake valve side. For this reason, the injector 11 is easily arranged at such a position that the diameter of an effective spot of the mixture of the fuel ejected from the fuel injection opening of the injection nozzle 11a and air at the intake valve opening is smaller than the radius of the intake valve opening 3e and the axis of the effective spot passes through the intake valve opening 3e and crosses the inner wall of the cylinder bore 2b at an acute angle.

Furthermore, since the throttle body 5 is connected to the intake pipe 25 so that the throttle body 5 comes closer to the intake port 3g, it is possible to quickly respond to the opening and closing of the first and second throttle valves 5a, 5b in the throttle body 5 and take the air into the cylinder bore 2b via the intake valve openings 3e. That is, the response to the throttle opening degree can be improved.

Still further, the recessed portion 3n is formed to prevent the fuel ejected against the partition wall 3h forming the right and left branch paths 3i, 3i from colliding. Thus, even if the injector 11 is placed in the center of these two branch paths 3i, 3i, the fuel ejected towards the two intake valve openings 3e, 3e as branch currents can be prevented from colliding and adhering to the partition wall 3h.

In the present embodiment, the injector 11 is placed very close to the intake valve opening 3e of the cylinder head 3 and the intake pipe 25 and the injector 11 are arranged so as not to interfere with each other, thus the injector 11 hardly interferes with the main pipe 20b when the engine 1 is fixed in suspension below the main pipe 20b.

Thus, the flexibility at the time of fixing the engine 1 to the main pipe 20b in suspension is not lost even if the injector is placed. Still further, it is easy to save the placement space for the throttle body 5 between the upper wall of the cylinder head 3 and the main pipe 20b, and thus the throttle response can be improved. Further, the number of bends of the intake pipe 25 is limited to one, and the bend R can be large. With such a structure, the intake resistance can be reduced.

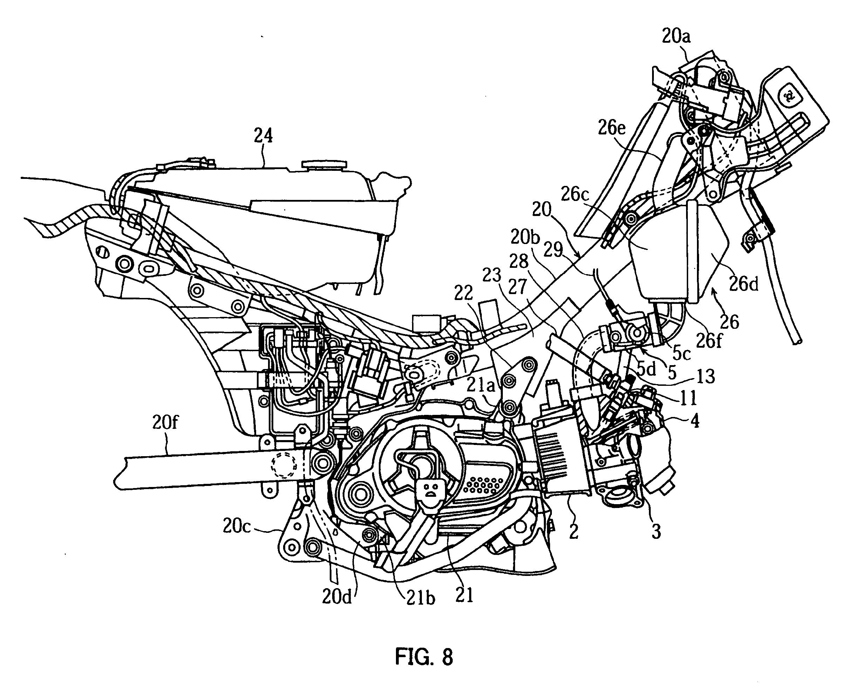

The intake pipe 25 is placed so as to be along the lower plane of the main pipe 2b, and the fuel supply hose 27 is placed on the same side thereof. Accordingly, the intake system and the fuel supply system can be simpler in placement structure. Here, in the above first embodiment, the throttle body 5 is directly connected to the upper wall of the cylinder head 3. In a second embodiment shown in FIG.8, an intake pipe 28 may be first extended upward then towards the front from the upper wall on the cylinder head 3, and then bent upward so as to be connected to a bottom plane 26f of the air cleaner 26. Then, the throttle body 5 including the throttle valve may be interposed in the part of the intake pipe 28 extending towards the front.

Also in the present embodiment, the fuel supply hose 27 is extending upward towards the rear on the right side of the intake pipe 28 and the main pipe 20b.

When such a structure is applied, it is easy to save the placement space of the throttle body 5. Also, the throttle body 5 is disposed in the lateral direction, making it easier to place and locate the driving system, especially the driving cable.

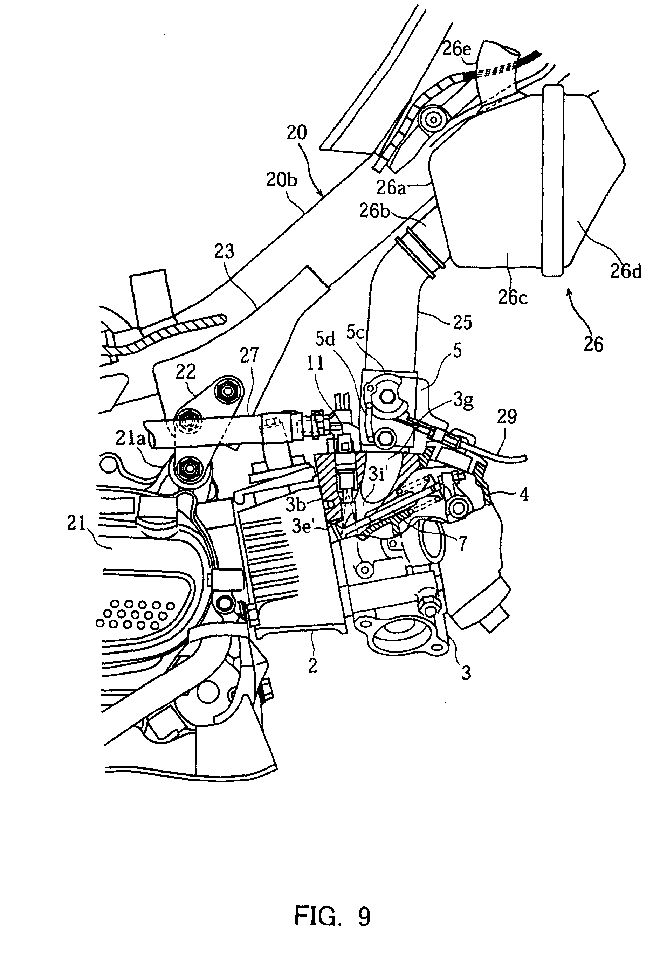

FIG.9 is a diagram for demonstrating a third embodiment of the present invention.

In the present third embodiment, the injector 11 is placed between the intake port 3g of the cylinder head 3 and the plane 3b on the cylinder block 2 side. To be more specific, the injector 11 is placed so that the fuel is directly ejected towards the combustion chamber via an intake valve opening 3e' from a branch path 3i' locating on the right side of the two intake valve openings 3e.

In the present embodiment, the injector 11 is placed on the side of the intake valve opening 3e' locating on the right, the part having the injection nozzle 11a of the injector 11 located thereon and the part between the first and second throttle valves 5a and 5b of the throttle body 5 are communicated with each other by the sub-passage 13, and from the no-load to the predetermined part-load operation period, the first throttle valve 5a is fully closed. Thus, the intake air can be supplied a lot with reliability to the part of the injection nozzle 11a as the atomized air. This allows the air/gas mixture of the fuel and the atomized air to go in the general direction along the inner circumference of the cylinder bore from the intake valve opening 3e' on the right side. With such a structure, horizontal vortexes (swirl) can be generated in the combustion chamber, accelerating the fuel atomization and improving the combustion efficiency.

Also in such a case, the injector 11 is directly attached to the cylinder head 3, and the injection nozzle 11a is placed very close to the intake valve opening 3e. This prevents the injector 11 from protruding a lot upward, and the placement flexibility of the engine frombeing reduced even if the injector 11 is placed.

This application is based on Japanese Patent Application No.2002-311486 filed on October 25, 2002, entire content of which is expressly incorporated by reference herein.

### Industrial Applicability

The present invention is applicable to a motorcycle mounted with an engine below a main frame, provided with an intake unit having an injector in an intermediate portion of an intake path.

## Claims

1. A motorcycle comprising:
a main frame that curves downward;
an engine and an air cleaner, positioned below the main frame; and
an intake pipe, provided below the main frame, between the engine and the air cleaner,
wherein the engine comprises:
an intake valve mounting section in which an intake valve for sucking air into a cylinder is mounted;
an exhaust valve mounting section in which an exhaust valve for exhausting a gas from the cylinder is mounted;
an intake port connected to the intake pipe for supplying outer air to the intake valve;
an injector mounting section in which an injector for ejecting a fuel is mounted and a fuel injection opening is provided in a position between a stem of the intake valve and a center axis of the intake port, close to an end of the intake port on the intake valve side; and
wherein the intake valve mounting section, exhaust valve mounting section, intake port and injector mounting section integrally form a cylinder head; and
wherein the intake pipe and the injector are positioned so as not to interfere with each other.

2. The motorcycle according to claim 1, wherein:
part of the outer air is guided into the fuel injection opening of the injector from the intake pipe; and
the injector mounting section positions the injector at such an angle that a mixture of the ejected fuel and part of the outer air generates air motion in the cylinder.

3. The motorcycle according to claim 1, further comprising:
a main-passage provided in the intake pipe for supplying the outer air to the intake port; and
a sub-passage branched from the main-passage, an opening end of which is disposed close to the fuel injection opening of the injector.

4. The motorcycle according to claim 1, wherein the injector directly ejects a fuel from the intake valve opened during fuel ejection into the cylinder.
